# EUROPEAN PATENT APPLICATION

(11) **EP 4 707 063 A1**
(43) Date of publication of application: **11.03.2026**
(21) Application number: 25164933.1
(22) Date of filing: 20.03.2025
(51) Int. Cl.: B60N 2/02, B60N 2/28

(54) **MANUAL ROTATION STRUCTURE, METHOD, AND CHILD SAFETY SEAT FOR ELECTRIC ROTATING CHAIRS**

(30) Priority: 05.09.2024 CN 202411240990
(71) Applicant: Ningbo Baby First Baby Products Co., Ltd., Ningbo, Zhejiang 315400 (CN)
(72) Inventor: ZHANG, Kai, Ningbo, Zhejiang, 315400 (CN); ZHOU, Xiaolin, Ningbo, Zhejiang, 315400 (CN)
(74) Representative: Santarelli

(57) **Abstract**

The invention discloses a manual rotation structure, method, and child safety seat for electric rotating chairs, including a base, a rotary disk, an electric rotary driving assembly, and a locking assembly. Multiple locking holes are spaced around the circumference of the rotary disk, and the electric rotary driving assembly is suitable for driving the rotary disk to rotate electrically relative to the base. The locking assembly includes a mounting base and a lock pin, an electric unlocking assembly, and a manual unlocking assembly, all movably connected to the mounting base. The multiple locking holes are designed to engage with the lock pin one at a time to fix the relative position of the rotary disk and the base. Both the electric unlocking assembly and the manual unlocking assembly are movably connected to the lock pin. When manual rotation of the rotary disk is needed, the electric unlocking assembly or the manual unlocking assembly is used to drive the lock pin to disengage from the locking hole, at which point the user can manually push the rotary disk to rotate relative to the base. Users can choose between electric or manual methods to unlock the lock pin based on actual needs, achieving rotation of the rotary disk, improving the operational flexibility of the seat.

## Description

### Technical Field

The present invention relates to the field of automotive safety products technology, specifically to a manual rotation structure, method, and child safety seat for electric rotating chairs.

### Background Art

With the upgrade of consumption and the promotion of new energy intelligent vehicles, more and more parents are not only concerned about the safety of children sitting in child seats but also particularly mindful of the convenience of seat operation. An increasing number of parents are using electric rotating seats for their children. In the prior art, electric rotating seats generally use a driving motor to rotate the seat back, which is a singular form. Moreover, electric rotating seats may encounter emergencies such as power outages during electric rotation, which can also lead to the child safety seat not being able to rotate normally.

### Summary of the Invention

To solve at least one aspect of the above problems, this invention first provides a manual rotation structure for electric rotating chairs, including a base, a rotary disk, an electric rotary driving assembly, and a locking assembly. The rotary disk is rotatably connected to the base, and multiple locking holes are spaced around the circumference of the rotary disk. The electric rotary driving assembly is set between the base and the rotary disk to drive the rotary disk to rotate electrically relative to the base. The locking assembly includes a mounting base and a lock pin, an electric unlocking assembly, and a manual unlocking assembly, all movably connected to the mounting base. The multiple locking holes are designed to engage with the lock pin one at a time to fix the relative position of the rotary disk and the base. Both the electric unlocking assembly and the manual unlocking assembly are movably connected to the lock pin. When manual rotation of the rotary disk is needed, the electric unlocking assembly or the manual unlocking assembly is used to drive the lock pin to disengage from the locking hole, at which point the user can manually push the rotary disk to rotate relative to the base.

Optionally, the electric rotary driving assembly includes a driving motor, a driving gear, and an outer ring gear. The outer ring gear is set on the rotary disk, the driving motor is connected to the driving gear, and the driving gear is meshed with the outer ring gear. When manual rotation of the rotary disk is needed, the driving motor does not work. After using the electric unlocking assembly or the manual unlocking assembly to drive the lock pin to disengage from the locking hole, the user can manually push the rotary disk to rotate relative to the base through the meshing transmission of the outer ring gear and the driving gear.

Optionally, the electric unlocking assembly includes a drive press block, a transmission motor, a first signal switch, and a second signal switch. Both the first signal switch and the second signal switch are installed inside the mounting base. The drive press block is connected to the transmission motor and rotatably installed inside the mounting base. The lock pin has a lever suitable for abutting against the drive press block. After the drive press block rotates to abut against the lever, it can push the lock pin to move, causing the lock pin to disengage from the locking hole. When manual rotation of the rotary disk is needed, the transmission motor works to drive the drive press block to rotate. The drive press block disengages from the second signal switch, and the drive press block pushes the lock pin to retract. When the lever triggers the first signal switch, the transmission motor stops working. At this point, the lock pin is disengaged from the locking hole, and the user can manually push the rotary disk to rotate relative to the base.

Optionally, it also includes a control panel and a circuit board that are electrically connected to each other. The control panel is set on the base. The electric rotary driving assembly, the transmission motor, the first signal switch, and the second signal switch are all electrically connected to the circuit board. Users can control the transmission motor and the electric rotary driving assembly to start working by operating the control panel.

Optionally, the locking assembly also includes a reset component set on the mounting base. The two ends of the reset component are connected to the mounting base and the lock pin respectively.

Optionally, the manual unlocking assembly includes a manual lock release block. The manual lock release block has an inclined slot, and the lock pin has a slope that matches the inclined slot. When manual rotation of the rotary disk is needed, the user pulls the manual lock release block to move. The lock pin retracts due to the sliding abutment between the slope and the inclined slot until the lock pin disengages from the locking hole. At this point, the user can manually push the rotary disk to rotate relative to the base.

Optionally, the manual unlocking assembly also includes a release handle and a pull cord. The two ends of the pull cord are connected to the release handle and the manual lock release block respectively.

Optionally, the manual lock release block has an insertion tab protruding backwards, and the lock pin has a first through hole. The insertion tab is inserted through the first through hole, with the inclined slot set on the insertion tab and the slope set inside the first through hole. The slope is inclined with the front higher than the back, and the insertion tab is suitable for up and down movable connection within the first through hole. When it is necessary to use the electric unlocking assembly to drive the lock pin to disengage from the locking hole for electric or manual rotation of the rotary disk, as the electric unlocking assembly drives the lock pin to move downwards, the insertion tab moves upwards relative to the first through hole.

Compared to the prior art, the manual rotation structure for electric rotating chairs in this invention, through the provision of an electric unlocking assembly and a manual unlocking assembly, allows users to choose between electric or manual methods to unlock the lock pin based on actual needs, achieving rotation of the rotary disk. Especially when the electric unlocking function fails, the manual unlocking assembly provides another reliable operation method, greatly improving the operational flexibility of the seat. In case of electric function failure or emergency situations, the manual unlocking assembly provides a means for emergency operation, allowing users to quickly adjust the seat position through manual unlocking when the electric function is unavailable, ensuring the usability and safety of the seat in various extreme situations. The structure is simple, and users can switch between different unlocking modes without complex operations, not only reducing the difficulty of use but also minimizing potential misoperations, further enhancing the user experience of the product.

Additionally, this invention provides a manual rotation method based on the aforementioned manual rotation structure for electric rotating chairs, including the steps: determining whether the electric rotary driving assembly is functioning normally or has received a start signal; if not, using the electric unlocking assembly or manual unlocking assembly to drive the lock pin to disengage from the locking hole, at which point the user can manually push the rotary disk to rotate relative to the base; if yes, controlling the electric unlocking assembly to start working to drive the lock pin to disengage from the locking hole, and controlling the electric rotary driving assembly to start working to drive the rotary disk to rotate electrically.

Compared to the prior art, the manual rotation method for electric rotating chairs in this invention has the same advantages as the aforementioned manual rotation structure for electric rotating chairs compared to the prior art, which will not be repeated here.

Furthermore, this invention provides a child safety seat that includes the aforementioned manual rotation structure for electric rotating chairs.

Compared to the prior art, the child safety seat in this invention has the same advantages as the aforementioned manual rotation structure for electric rotating chairs compared to the prior art, which will not be repeated here.

### Brief Description of the Drawings

Figure 1 is a structural diagram of the child safety seat in this invention's embodiment;
Figure 2 is a partial exploded view of the child safety seat in this invention's embodiment;
Figure 3 is a structural diagram of the rotary disk in this invention's embodiment;
Figure 4 is an exploded view of the locking assembly in this invention's embodiment;
Figure 5 is a partial sectional view of the child safety seat when the rotary disk is locked by the lock pin in this invention's embodiment;
Figure 6 is a partial structural diagram of the child safety seat when the rotary disk is locked by the lock pin in this invention's embodiment;
Figure 7 is a structural diagram of the locking assembly when the lock pin is locking the rotary disk in this invention's embodiment;
Figure 8 is a partial sectional view of the child safety seat when the rotary disk is unlocked in this invention's embodiment;
Figure 9 is a partial structural diagram of the child safety seat when the rotary disk is unlocked in this invention's embodiment;
Figure 10 is a structural diagram of the locking assembly when the lock pin is unlocking the rotary disk in this invention's embodiment.

### List of reference numerals:

1, base; 11, boss; 2, rotary disk; 21, locking hole; 3, electric rotary driving assembly; 31, driving motor; 32, driving gear; 33, outer ring gear; 4, locking assembly; 41, mounting base; 411, body; 4111, second through hole; 412, cover; 4121, third through hole; 42, lock pin; 421, lever; 4211, guiding slope; 422, slope; 423, first through hole; 43, electric unlocking assembly; 431, drive press block; 432, transmission motor; 433, first signal switch; 434, second signal switch; 44, manual unlocking assembly; 441, manual lock release block; 4411, inclined slot; 4412, insertion tab; 4413, kidney-shaped slot; 442, release handle; 4421, groove; 443, pull cord; 4431, pull ring; 45, reset component; 5, control panel; 6, seat back; 7, circuit board.

### Detailed Description of Embodiments

To make the above-mentioned objectives, features, and advantages of this invention more apparent and easier to understand, the specific embodiments of this invention will be described in detail with reference to the accompanying drawings.

In the description of this invention, it should be understood that terms such as "up" and "down" indicate directional or positional relationships based on the normal use orientation or position of the product.

The terms "first" and "second" are used only for descriptive purposes and should not be understood as indicating or implying relative importance or implicitly specifying the number of technical features indicated. Thus, features defined as "first" and "second" may explicitly or implicitly include at least one such feature. In the accompanying drawings of the embodiments of this invention, a coordinate axis Y is set, where the positive direction of the Y-axis represents the front, and the negative direction of the Y-axis represents the back.

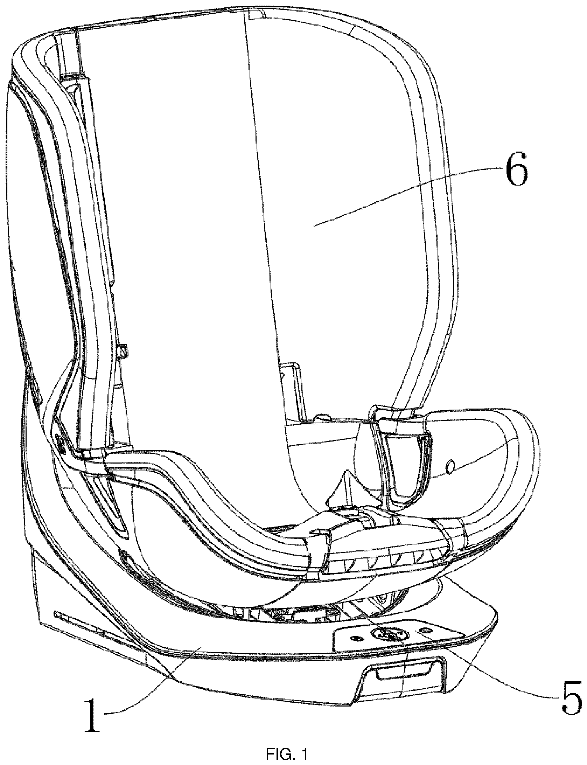

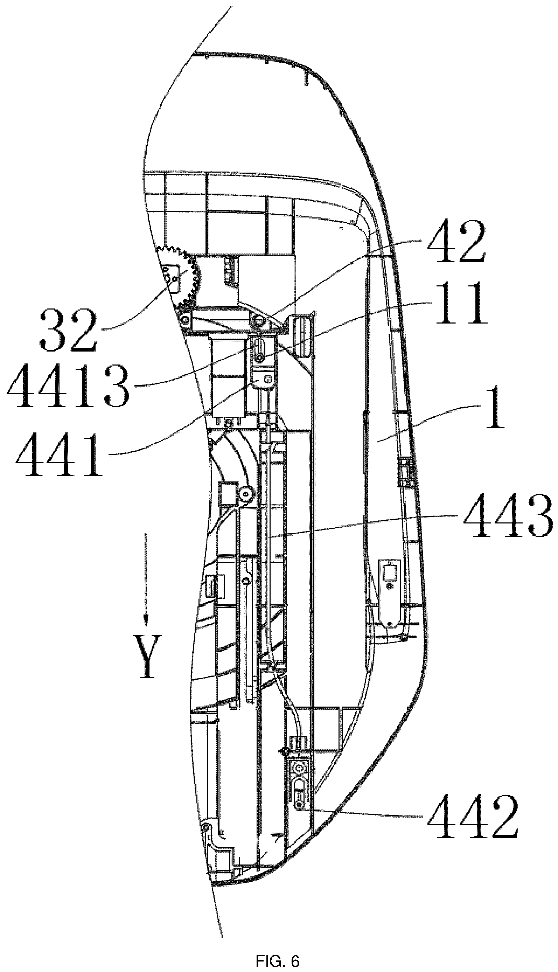

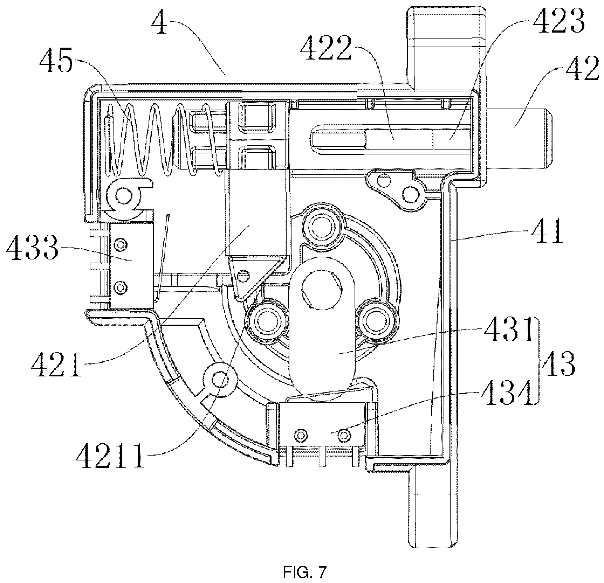

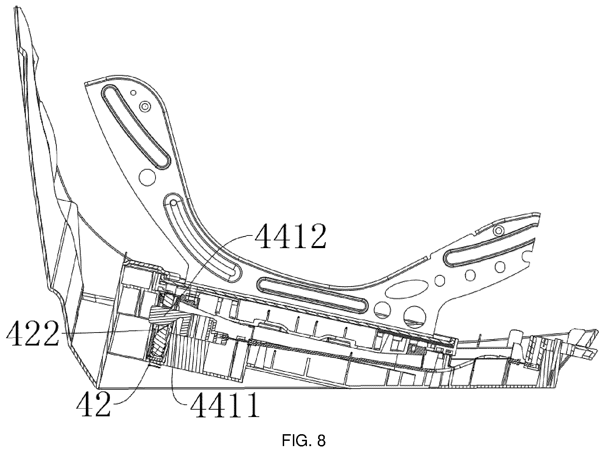

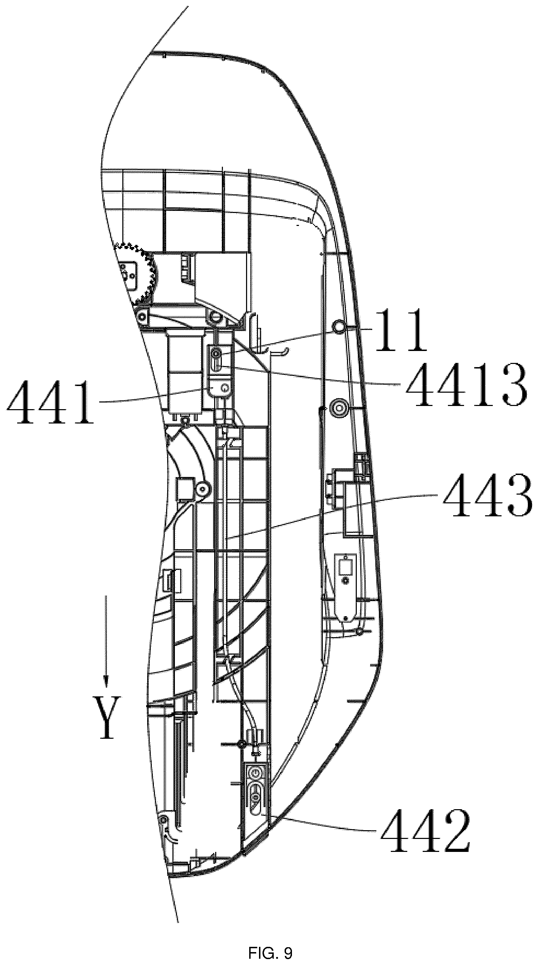

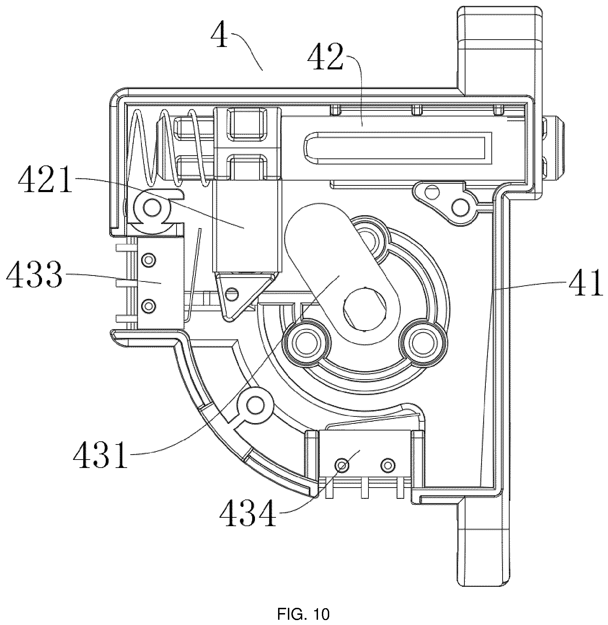

The embodiment of this invention provides a manual rotation structure for electric rotating chairs. As shown in Figures 1 to 10, it includes a base 1, a rotary disk 2, an electric rotary driving assembly 3, and a locking assembly 4. The rotary disk 2 is rotatably connected to the base 1, and multiple locking holes 21 are spaced around the circumference of the rotary disk 2. The electric rotary driving assembly 3 is set between the base 1 and the rotary disk 2 to drive the rotary disk 2 to rotate electrically relative to the base 1. The locking assembly 4 includes a mounting base 41 and a lock pin 42, an electric unlocking assembly 43, and a manual unlocking assembly 44, all movably connected to the mounting base 41. The multiple locking holes 21 are designed to engage with the lock pin 42 one at a time to fix the relative position of the rotary disk 2 and the base 1. Both the electric unlocking assembly 43 and the manual unlocking assembly 44 are movably connected to the lock pin 42. When manual rotation of the rotary disk 2 is needed, the electric unlocking assembly 43 or the manual unlocking assembly 44 is used to drive the lock pin 42 to disengage from the locking hole 21, at which point the user can manually push the rotary disk 2 to rotate relative to the base 1.

The mounting base 41 is fixed on the base 1, used to support the lock pin 42 and unlocking assemblies. The mounting base 41 includes a body 411 and a cover 412. The body 411 is used to carry components such as the rotary disk 2, locking assembly 4, and electric rotary driving assembly 3. The cover 412 can seal and protect the components inside the mounting base 41. The lock pin 42 is movably connected to the mounting base 41, usually in a state of being inserted into the locking hole 21 of the rotary disk 2 to fix the position of the rotary disk 2. The electric unlocking assembly 43 is connected to the lock pin 42. In electric mode, it drives the lock pin 42 to disengage from the locking hole 21 through an electric signal, allowing the rotary disk 2 to rotate electrically or manually. The manual unlocking assembly 44 is connected to the lock pin 42. When the electric mode fails or manual operation is needed, users can manually drive the lock pin 42 to disengage from the locking hole 21 through the manual unlocking assembly 44, thus performing manual rotation of the rotary disk 2. Multiple locking holes 21 are spaced around the circumference of the rotary disk 2. These locking holes 21 match with the lock pin 42 to fix the position of the rotary disk 2. By selecting different locking holes 21, users can fix the rotary disk 2 at multiple angle positions. The rotary disk 2 can rotate freely relative to the base 1. Once the lock pin 42 disengages from the locking hole 21, the rotary disk 2 can be rotated manually or electrically.

The manual rotation structure for electric rotating chairs in this embodiment, through the provision of an electric unlocking assembly 43 and a manual unlocking assembly 44, allows users to choose between electric or manual methods to unlock the lock pin 42 based on actual needs, achieving rotation of the rotary disk 2. Especially when the electric unlocking function fails, the manual unlocking assembly 44 provides another reliable operation method, greatly improving the operational flexibility of the seat. In case of electric function failure or emergency situations, the manual unlocking assembly 44 provides a means for emergency operation, allowing users to quickly adjust the seat position through manual unlocking when the electric function is unavailable, ensuring the usability and safety of the seat in various extreme situations. The structure is simple, and users can switch between different unlocking modes without complex operations, not only reducing the difficulty of use but also minimizing potential misoperations, further enhancing the user experience of the product.

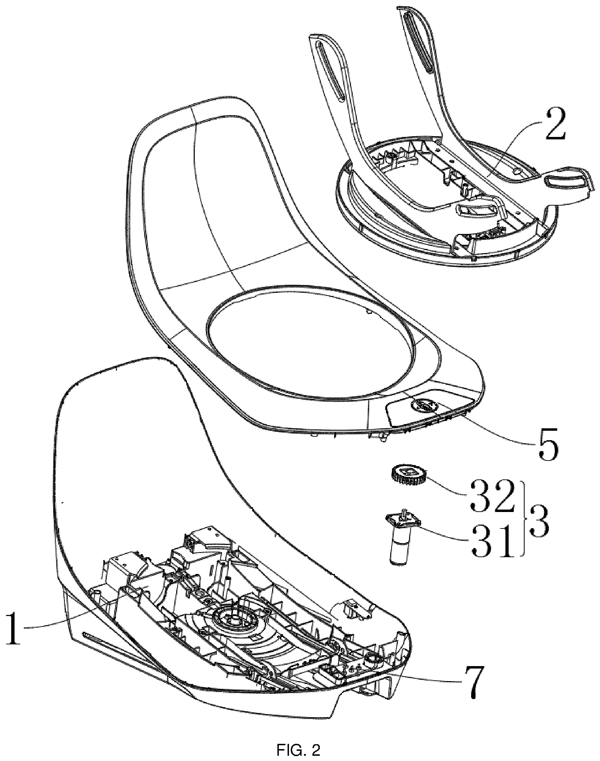

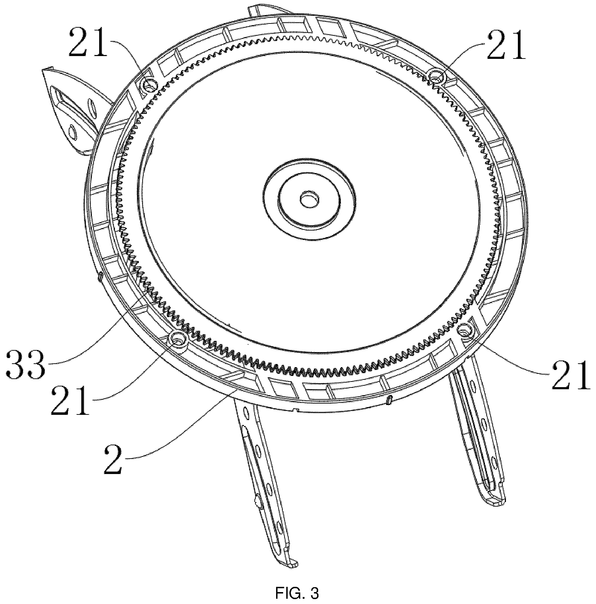

Optionally, as shown in Figures 2 and 3, the electric rotary driving assembly 3 includes a driving motor 31, a driving gear 32, and an outer ring gear 33. The outer ring gear 33 is set on the rotary disk 2, the driving motor 31 is connected to the driving gear 32, and the driving gear 32 is meshed with the outer ring gear 33. When manual rotation of the rotary disk 2 is needed, the driving motor 31 does not work. After using the electric unlocking assembly 43 or the manual unlocking assembly 44 to drive the lock pin 42 to disengage from the locking hole 21, the user can manually push the rotary disk 2 to rotate relative to the base 1 through the meshing transmission of the outer ring gear 33 and the driving gear 32.

The driving gear 32 is connected to the driving motor 31, and the outer ring gear 33 is distributed around the circumference of the rotary disk 2. The rotational motion of the driving motor 31 is transmitted to the outer ring gear 33, and the driving gear 32 is meshed with the outer ring gear 33 through its teeth, achieving the rotation of the rotary disk 2 relative to the base 1. Under normal circumstances, the driving motor 31 drives the outer ring gear 33 to rotate through the driving gear 32, thus achieving the electric rotation of the rotary disk 2. When manual rotation is needed, the driving motor 31 stops working. At this point, the user can use the electric unlocking assembly 43 or the manual unlocking assembly 44 to disengage the lock pin 42 from the locking hole 21 on the rotary disk 2. After the lock pin 42 is unlocked, the outer ring gear 33 and the driving gear 32 remain in a meshed state, and the user can manually push the rotary disk 2 to achieve rotation relative to the base 1 through the transmission of the outer ring gear 33. After the lock pin 42 disengages, since the driving gear 32 and the outer ring gear 33 remain meshed but do not have a self-locking function, the user can directly push the rotary disk 2 by hand, achieving manual rotation of the rotary disk 2 through the meshing of the outer ring gear 33 and the driving gear 32.

In this embodiment, the non-self-locking design between the driving gear 32 and the outer ring gear 33 does not hinder manual operation when the driving motor 31 stops working, ensuring that users can manually adjust the seat at any time in emergency situations. This achieves simplicity and reliability of manual rotation, providing users with a more flexible and safer user experience. Additionally, since the outer ring gear 33 and the driving gear 32 are always in a meshed state, seamless switching between electric rotation and manual rotation can be achieved. When the electric mode fails or the user chooses manual operation, no additional complex adjustments are needed. Manual rotation can be easily achieved by simply unlocking the lock pin 42, greatly improving the operational convenience and flexibility of the seat.

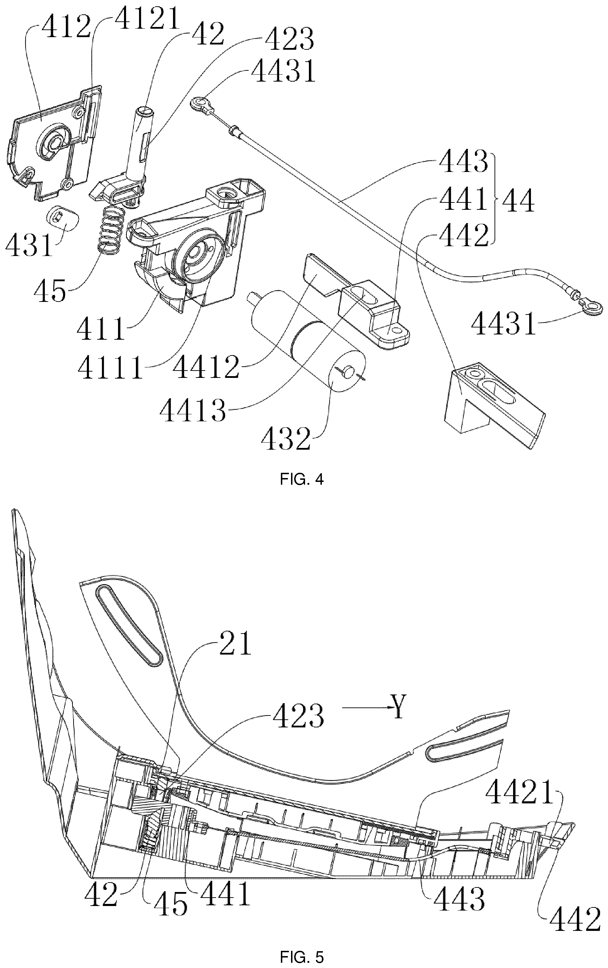

Optionally, as shown in Figures 4 to 10, the electric unlocking assembly 43 includes a drive press block 431, a transmission motor 432, a first signal switch 433, and a second signal switch 434. Both the first signal switch 433 and the second signal switch 434 are installed inside the mounting base 41. The drive press block 431 is connected to the transmission motor 432 and rotatably installed inside the mounting base 41. The lock pin 42 has a lever 421 suitable for abutting against the drive press block 431. After the drive press block 431 rotates to abut against the lever 421, it can push the lock pin 42 to move, causing the lock pin 42 to disengage from the locking hole 21. When manual rotation of the rotary disk 2 is needed, the transmission motor 432 works to drive the drive press block 431 to rotate. The drive press block 431 disengages from the second signal switch 434, and the drive press block 431 pushes the lock pin 42 to retract. When the lever 421 triggers the first signal switch 433, the transmission motor 432 stops working. At this point, the lock pin 42 is disengaged from the locking hole 21, and the user can manually push the rotary disk 2 to rotate relative to the base 1.

In this setup, the drive press block 431 can rotate under the drive of the transmission motor 432. The drive press block 431 uses a rotational motion to contact and push the lever 421 of the lock pin 42, thereby causing the lock pin 42 to disengage from the locking hole 21. When the drive press block 431 rotates to a certain angle and contacts the lever 421, it pushes the lock pin 42 to move, disengaging it from the locking hole 21, thus unlocking the rotary disk 2. The second signal switch 434 is used to detect the status of the drive press block 431 in its initial position. When the drive press block 431 begins to rotate and disengages from the second signal switch 434, the transmission motor 432 continues to work until the lock pin 42 disengages from the locking hole 21. When the lever 421 triggers the first signal switch 433, the transmission motor 432 stops working, indicating that the lock pin 42 has completely disengaged from the locking hole 21. At this point, the rotary disk 2 can be rotated. During this process, the transmission motor 432 will stop for a period of time to ensure that the positions of the lock pin 42 and the locking hole 21 are offset.

When the rotary disk 2 is manually rotated close to the desired position, the transmission motor 432 restarts to drive the drive press block 431 to rotate. The drive press block 431 disengages from the lever 421 until the drive press block 431 triggers the second signal switch 434, at which point the transmission motor 432 stops working. When the rotary disk 2 rotates to the desired position, the lock pin 42 aligns with the locking hole 21 at the desired position and resets to extend and engage with the locking hole 21, completing the manual rotation operation of the rotary disk 2. The end of the lever 421 has a guiding slope 4211, and the drive press block 431 is kidney-shaped, making it easy for the drive press block 431 to disengage smoothly from the lever 421 when rotating. The lever 421 and the lock pin 42 are set perpendicular to each other, ensuring that when the drive press block 431 rotates, it can effectively convert its rotational motion into linear motion of the lock pin 42. This linear motion can more directly and effectively push the lock pin 42 to disengage from the locking hole 21, improving the efficiency of the unlocking operation.

In this embodiment, through the precise coordination of the drive press block 431 and the lever 421, as well as the auxiliary detection of the first signal switch 433 and the second signal switch 434, the electric unlocking assembly 43 can achieve precise control of the lock pin 42. When the drive press block 431 rotates to a specific position, the signal switches accurately trigger the motor to start or stop, ensuring that the lock pin 42 disengages from the locking hole 21 at the correct moment, greatly improving the reliability of the seat rotation operation. The setup of the first signal switch 433 and the second signal switch 434 effectively prevents misoperation. Only when the drive press block 431 disengages from the second signal switch 434 and the lever 421 triggers the first signal switch 433 will the unlocking process be completed, preventing situations where the lock pin 42 stops operating before fully disengaging from the locking hole 21, ensuring the safety and accuracy of the operation.

Optionally, as shown in Figures 1 and 2, it also includes a control panel 5 and a circuit board 7 that are electrically connected to each other. The control panel 5 is set on the base 1. The electric rotary driving assembly 3, the transmission motor 432, the first signal switch 433, and the second signal switch 434 are all electrically connected to the circuit board 7. Users can control the transmission motor 432 and the electric rotary driving assembly 3 to start working by operating the control panel 5.

Users can operate the entire electric rotation system through the control panel 5. The control panel 5 can be equipped with buttons, switches, or touch screens for users to input operation commands. Users only need to perform simple operations on the control panel 5 to complete the control of seat rotation and unlocking processes, greatly simplifying the operation process and enhancing ease of use. The circuit board 7 can receive instructions from the control panel 5 and control the start and stop of related components. In addition, users can also remotely control the electric rotation system through an APP on mobile devices (such as smartphones or tablets). Through the APP, users can achieve wireless operation, making it convenient for users to control the seat rotation from outside the vehicle or from different positions inside the vehicle.

Optionally, as shown in Figures 4 to 10, the manual unlocking assembly 44 includes a manual lock release block 441. The manual lock release block 441 has an inclined slot 4411, and the lock pin 42 has a slope 422 that matches the inclined slot 4411. When manual rotation of the rotary disk 2 is needed, the user pulls the manual lock release block 441 to move. The lock pin 42 retracts due to the sliding abutment between the slope 422 and the inclined slot 4411 until the lock pin 42 disengages from the locking hole 21. At this point, the user can manually push the rotary disk 2 to rotate relative to the base 1.

The inclined slot 4411 is a sloped guiding slot, and the slope 422 is designed as an inclined surface, so that when the manual lock release block 441 moves, it can generate a certain force to pull the lock pin 42 out of the locking hole 21. When users need to manually rotate the seat, by pulling the manual lock release block 441, the inclined slot 4411 works with the slope 422 of the lock pin 42, causing the lock pin 42 to be pushed back and retract during the pulling process, thus disengaging from the locking hole 21. This manual operation method is simple and effective, allowing users to easily complete the unlocking operation. The design of the inclined slot 4411 and slope 422 utilizes the principle of inclined plane sliding, converting lateral pulling force into pushing force, reducing the force users need to apply during the unlocking process. This mechanical design optimizes the user experience, especially in emergency situations where users can operate more easily. The design of the manual lock release block 441 provides users with clear force feedback during operation, further improving the perceptibility of the operation. Users can judge whether the lock pin 42 has successfully disengaged from the locking hole 21 through tactile feedback, and this direct feedback enhances the certainty of the operation.

Optionally, as shown in Figures 4, 5, 6, 8, and 9, the manual unlocking assembly 44 also includes a release handle 442 and a pull cord 443. The two ends of the pull cord 443 are connected to the release handle 442 and the manual lock release block 441 respectively. Pull rings 4431 are set at both ends of the pull cord 443, and the two pull rings 4431 are fixedly connected to the release handle 442 and the manual lock release block 441 respectively through screws. The manual lock release block 441 has a kidney-shaped slot 4413, and the base 1 has a boss 11 that matches the kidney-shaped slot 4413. The length direction of the kidney-shaped slot 4413 is consistent with the front-back direction, limiting the manual lock release block 441 to move only in the front-back direction. The release handle 442 is the component directly operated by users, designed in a shape that is easy to grip, usually placed in an easily accessible position on the seat. Users trigger the manual unlocking process by pulling the release handle 442. The bottom of the release handle 442 has a groove 4421 for finger placement, making it easier for users to apply force. The pull cord 443 serves as a force transmission device. When the user pulls the release handle 442, the pull cord 443 transmits the pulling force to the manual lock release block 441, causing it to move accordingly, thus achieving the unlocking of the lock pin 42.

In this embodiment, the design of the release handle 442 and pull cord 443 extends the unlocking operation from the bottom or side of the seat to a more convenient and easily accessible position. Users can easily unlock by pulling the release handle 442 without having to reach for hidden unlocking devices, greatly improving operational convenience. By transmitting force through the pull cord 443, the position of the release handle 442 can be flexibly set according to design requirements, unrestricted by the installation position of the manual lock release block 441. This makes the seat design more flexible, able to adapt to the needs of different vehicle models and seat layouts, providing users with a more comfortable operating experience and also improving emergency efficiency.

Optionally, as shown in Figures 4 to 10, the manual lock release block 441 has an insertion tab 4412 protruding backwards, and the lock pin 42 has a first through hole 423. The insertion tab 4412 is inserted through the first through hole 423, with the inclined slot 4411 set on the insertion tab 4412 and the slope 422 set inside the first through hole 423. The slope 422 is inclined with the front higher than the back, and the insertion tab 4412 is suitable for up and down movable connection within the first through hole 423. When it is necessary to use the electric unlocking assembly 43 to drive the lock pin 42 to disengage from the locking hole 21 for electric or manual rotation of the rotary disk 2, as the electric unlocking assembly 43 drives the lock pin 42 to move downwards, the insertion tab 4412 moves upwards relative to the first through hole 423. When the user pulls the manual lock release block 441, the insertion tab 4412 moves upwards relative to the first through hole 423, and through the interaction of the inclined slot 4411 and the slope 422, it pushes the lock pin 42 to move, causing it to disengage from the locking hole 21, allowing the user to manually rotate the rotary disk 2. The electric unlocking assembly 43 and the manual unlocking assembly 44 are designed to avoid interfering with each other. Whether in electric or manual operation, both systems can independently complete the unlocking process of the lock pin 42, ensuring the reliability of each operation mode.

In this setup, the insertion tab 4412 is inserted through the first through hole 423 on the lock pin 42, the inclined slot 4411 on the insertion tab 4412 matches with the slope 422 inside the lock pin 42, and the insertion tab 4412 can move back and forth within the first through hole 423, controlling the up and down movement of the lock pin 42 through sliding. Through the design of the insertion tab 4412 and the first through hole 423, the entire locking and unlocking structure is more compact, occupying less space, suitable for installation in limited spaces. The manual unlocking assembly 44 and the electric unlocking assembly 43 do not interfere with each other. The body 411 of the mounting base 41 has a second through hole 4111, and the cover 412 has a third through hole 4121. The second through hole 4111 and the third through hole 4121 are at the front and back sides of the first through hole 423 respectively. The first through hole 423, second through hole 4111, and third through hole 4121 are correspondingly arranged, with the insertion tab 4412 inserted through the second through hole 4111, first through hole 423, and third through hole 4121 in sequence, increasing the structural stability and the smoothness of the insertion tab 4412's movement. The design of the insertion tab 4412 allows both electric and manual unlocking functions to be realized in the same structure. When the electric unlocking assembly 43 works, the insertion tab 4412 achieves smooth unlocking of the lock pin 42 through relative movement. This multi-functional unlocking mechanism allows the seat to rotate smoothly in different situations, increasing the system's applicability and flexibility.

Optionally, as shown in Figures 4 to 10, the locking assembly 4 also includes a reset component 45 set on the mounting base 41. The two ends of the reset component 45 are connected to the mounting base 41 and the lock pin 42 respectively. The reset component 45 is preferably a compression spring, so that it can automatically return to its original state after being compressed, that is, the lock pin 42 can move and reinsert into the locking hole 21 under the resetting force of the reset component 45, ensuring that the rotary disk 2 can be locked in the correct position when needed. The reset component 45 provides an automatic recovery function. This automatic recovery mechanism simplifies the operation process, reduces user intervention, and improves operational convenience and system reliability.

The reset process after electric unlocking: When the electric unlocking assembly 43 is activated, the transmission motor 432 drives the drive press block 431 to rotate, pushing the lock pin 42 to move, causing it to disengage from the locking hole 21, completing the unlocking action. During the unlocking process, the compression spring is compressed, storing elastic potential energy. After the transmission motor 432 stops working, the drive press block 431 stops applying force to the lock pin 42. At this point, the elastic potential energy of the compression spring is released, pushing the lock pin 42 to move towards the locking hole 21 until the lock pin 42 reinserts into the locking hole 21, completing the reset.

The reset process after manual unlocking: The user pulls the manual lock release block 441, which, through the interaction of the inclined slot 4411 and the slope 422, pulls the lock pin 42 out of the locking hole 21, completing the unlocking. During this process, the compression spring is also compressed, storing elastic potential energy. After the user releases the manual lock release block 441, there is no longer any external force acting on the lock pin 42, and the compression spring automatically returns to its initial state, pushing the lock pin 42 back to its original position, inserting into the locking hole 21, completing the reset.

Another embodiment of this invention provides a manual rotation method based on the aforementioned manual rotation structure for electric rotating chairs, including the steps:
Determining whether the electric rotary driving assembly 3 is functioning normally or has received a start signal; this can be determined through sensors, indicator lights on the control panel 5, or system self-check programs. The system will monitor whether the electric rotary driving assembly 3 has power supply, whether it starts normally, and whether it has received a start signal from the control panel 5;
If not, use the electric unlocking assembly 43 or manual unlocking assembly 44 to drive the lock pin 42 to disengage from the locking hole 21, at which point the user can manually push the rotary disk 2 to rotate relative to the base 1; if the electric unlocking assembly 43 is functioning, the user can choose to use the electric unlocking assembly 43 to unlock the seat, which electrically drives the lock pin 42 to disengage from the locking hole 21; if the electric unlocking assembly 43 is not functioning, the user needs to use the manual unlocking assembly 44 to unlock the seat, manually pushing the lock pin 42 to disengage from the locking hole 21 through components such as the manual lock release block 441, release handle 442, and pull cord 443; after the lock pin 42 disengages from the locking hole 21, the user can manually push the rotary disk 2 to rotate relative to the base 1, at which point the seat back 6 can be manually rotated to adjust to the desired position;
If yes, control the electric unlocking assembly 43 to start working to drive the lock pin 42 to disengage from the locking hole 21, and control the electric rotary driving assembly 3 to start working to drive the rotary disk 2 to rotate electrically; control the electric unlocking assembly 43 to start, driving the lock pin 42 to disengage from the locking hole 21, ensuring that the lock pin 42 will not obstruct the movement of the rotary disk 2 during electric rotation; after the lock pin 42 successfully disengages, control the electric rotary driving assembly 3 to start working, which will drive the rotary disk 2 to rotate electrically, and the user can adjust the angle or position of the rotary disk 2 through the control panel 5.

This embodiment chooses different unlocking and rotation methods based on the status of the electric rotary driving assembly 3, allowing users to complete seat rotation manually or electrically whether the electric system is functioning normally or not, increasing operational flexibility and adaptability; the manual unlocking and rotation design provides an effective backup solution for electric system failures, ensuring that users can adjust the seat in various situations, enhancing the overall reliability and emergency response capability of the system.

The specific manual rotation method for electric rotating chairs mentioned above is as follows:
The user starts the electric rotating chair through the control panel 5 or APP; the system first detects the working status of the electric rotary driving assembly 3, determining whether it is in normal working condition or has received a signal to start rotation; if the electric rotary driving assembly 3 has not received a start signal or has malfunctioned, the system will switch to manual rotation mode;
The user manually pulls the release handle 442, which has a groove 4421 at the bottom for hand placement, allowing users to place their fingers in the groove 4421 for easy pulling operation; the release handle 442 is connected to the manual lock release block 441 through the pull cord 443, when the user pulls the release handle 442, the pull cord 443 is pulled, thus driving the manual lock release block 441 to move;
The manual lock release block 441 has an inclined slot 4411, and the lock pin 42 has a slope 422 inside its first through hole 423 that matches the inclined slot 4411. When the release block moves, the interaction between the inclined slot 4411 and the slope 422 causes the lock pin 42 to move downward along the slope 422, gradually disengaging from the locking hole 21 on the rotary disk 2, completing the unlocking process;
After unlocking is complete, the rotary disk 2 is no longer in a locked state, and the user can directly push the seat rotary disk 2 by hand; during the rotation process, the driving gear 32 and the outer ring gear 33 remain in a meshed state, and the user rotates the seat manually by pushing the rotary disk 2, which drives the outer ring gear 33 to rotate around the circumference of the rotary disk 2;
After the user completes the rotation operation, they release the release handle 442; after the user lets go of the release handle 442, the lock pin 42 waits to be pushed back into place by the resetting force of the compression spring when it aligns with the locking hole 21; as the lock pin 42 resets, it will reinsert into the locking hole 21 on the rotary disk 2, ensuring that the rotary disk 2 is firmly locked in the new position.

The user can check if the rotary disk 2 is securely locked in the new position by gently pushing the rotary disk 2 to confirm that it does not continue to rotate, ensuring that the lock pin 42 has fully inserted into the locking hole 21; after this, the manual rotation operation is complete, and the seat enters a safe locked state.

Another embodiment of this invention provides a child safety seat that includes the aforementioned manual rotation structure for electric rotating chairs.

The child safety seat in this embodiment, through the provision of an electric unlocking assembly 43 and a manual unlocking assembly 44, allows users to choose between electric or manual methods to unlock the lock pin 42 based on actual needs, achieving rotation of the rotary disk 2. Especially when the electric unlocking function fails, the manual unlocking assembly 44 provides another reliable operation method, greatly improving the operational flexibility of the seat. In case of electric function failure or emergency situations, the manual unlocking assembly 44 provides a means for emergency operation, allowing users to quickly adjust the seat position through manual unlocking when the electric function is unavailable, ensuring the usability and safety of the seat in various extreme situations. The structure is simple, and users can switch between different unlocking modes without complex operations, not only reducing the difficulty of use but also minimizing potential misoperations, further enhancing the user experience of the product.

Although this disclosure has been described as above, the scope of protection of this disclosure is not limited to this. Those skilled in the art can make various changes and modifications without departing from the spirit and scope of this disclosure, and these changes and modifications will all fall within the scope of protection of this invention.

## Claims

1. A manual rotation structure for electric rotating chairs, **characterized by** comprising a base (1), a rotary disk (2), an electric rotary driving assembly (3), and a locking assembly (4), wherein the rotary disk (2) is rotatably connected to the base (1), multiple locking holes (21) are spaced around the circumference of the rotary disk (2), the electric rotary driving assembly (3) is set between the base (1) and the rotary disk (2) to drive the rotary disk (2) to rotate electrically relative to the base (1); the locking assembly (4) includes a mounting base (41) and a lock pin (42), an electric unlocking assembly (43), and a manual unlocking assembly (44), all movably connected to the mounting base (41), the multiple locking holes (21) are designed to engage with the lock pin (42) one at a time to fix the relative position of the rotary disk (2) and the base (1), both the electric unlocking assembly (43) and the manual unlocking assembly (44) are movably connected to the lock pin (42); when manual rotation of the rotary disk (2) is needed, the electric unlocking assembly (43) or the manual unlocking assembly (44) is used to drive the lock pin (42) to disengage from the locking hole (21), at which point the user can manually push the rotary disk (2) to rotate relative to the base (1).

2. The manual rotation structure for electric rotating chairs according to claim 1, **characterized in that** the electric rotary driving assembly (3) includes a driving motor (31), a driving gear (32) and an outer ring gear (33), the outer ring gear (33) is set on the rotary disk (2), the driving motor (31) is connected to the driving gear (32), the driving gear (32) is meshed with the outer ring gear (33); when manual rotation of the rotary disk (2) is needed, the driving motor (31) does not work, after using the electric unlocking assembly (43) or the manual unlocking assembly (44) to drive the lock pin (42) to disengage from the locking hole (21), through the meshing transmission of the outer ring gear (33) and the driving gear (32), the user can manually push the rotary disk (2) to rotate relative to the base (1).

3. The manual rotation structure for electric rotating chairs according to claim 1, **characterized in that** the electric unlocking assembly (43) includes a drive press block (431), a transmission motor (432), a first signal switch (433) and a second signal switch (434), both the first signal switch (433) and the second signal switch (434) are installed inside the mounting base (41), the drive press block (431) is connected to the transmission motor (432) and rotatably installed inside the mounting base (41), the lock pin (42) has a lever (421) suitable for abutting against the drive press block (431), after the drive press block (431) rotates to abut against the lever (421), it can push the lock pin (42) to move, causing the lock pin (42) to disengage from the locking hole (21); when manual rotation of the rotary disk (2) is needed, the transmission motor (432) works to drive the drive press block (431) to rotate, the drive press block (431) disengages from the second signal switch (434), the drive press block (431) pushes the lock pin (42) to retract, when the lever (421) triggers the first signal switch (433), the transmission motor (432) stops working, at this point the lock pin (42) is disengaged from the locking hole (21), at this point the user can manually push the rotary disk (2) to rotate relative to the base (1).

4. The manual rotation structure for electric rotating chairs according to claim 3, **characterized in that** it also includes a control panel (5) and a circuit board (7) that are electrically connected to each other, the control panel (5) is set on the base (1), the electric rotary driving assembly (3), the transmission motor (432), the first signal switch (433) and the second signal switch (434) are all electrically connected to the circuit board (7), users can control the transmission motor (432) and the electric rotary driving assembly (3) to start working by operating the control panel (5).

5. The manual rotation structure for electric rotating chairs according to claim 1, **characterized in that** the locking assembly (4) also includes a reset component (45) set on the mounting base (41), the two ends of the reset component (45) are connected to the mounting base (41) and the lock pin (42) respectively.

6. The manual rotation structure for electric rotating chairs according to any one of claims 1-5, **characterized in that** the manual unlocking assembly (44) includes a manual lock release block (441), the manual lock release block (441) has an inclined slot (4411), the lock pin (42) has a slope (422) that matches the inclined slot (4411); when manual rotation of the rotary disk (2) is needed, the user pulls the manual lock release block (441) to move, the lock pin (42) retracts due to the sliding abutment between the slope (422) and the inclined slot (4411) until the lock pin (42) disengages from the locking hole (21), at this point the user can manually push the rotary disk (2) to rotate relative to the base (1).

7. The manual rotation structure for electric rotating chairs according to claim 6, **characterized in that** the manual unlocking assembly (44) also includes a release handle (442) and a pull cord (443), the two ends of the pull cord (443) are connected to the release handle (442) and the manual lock release block (441) respectively.

8. The manual rotation structure for electric rotating chairs according to claim 6, **characterized in that** the manual lock release block (441) has an insertion tab (4412) protruding backwards, the lock pin (42) has a first through hole (423), the insertion tab (4412) is inserted through the first through hole (423), the inclined slot (4411) is set on the insertion tab (4412), the slope (422) is set inside the first through hole (423), the slope (422) is inclined with the front higher than the back, the insertion tab (4412) is suitable for up and down movable connection within the first through hole (423); when it is necessary to use the electric unlocking assembly (43) to drive the lock pin (42) to disengage from the locking hole (21) for electric or manual rotation of the rotary disk (2), as the electric unlocking assembly (43) drives the lock pin (42) to move downwards, the insertion tab (4412) moves upwards relative to the first through hole (423).

9. A manual rotation method based on the manual rotation structure for electric rotating chairs according to any one of claims 1-8, **characterized by** comprising the steps:
determining whether the electric rotary driving assembly (3) is functioning normally or has received a start signal;
if not, use the electric unlocking assembly (43) or manual unlocking assembly (44) to drive the lock pin (42) to disengage from the locking hole (21), at which point the user can manually push the rotary disk (2) to rotate relative to the base (1);
if yes, control the electric unlocking assembly (43) to start working to drive the lock pin (42) to disengage from the locking hole (21), and control the electric rotary driving assembly (3) to start working to drive the rotary disk (2) to rotate electrically.

10. A child safety seat, **characterized by** comprising the manual rotation structure for electric rotating chairs according to any one of claims 1-9.
